# EUROPÄISCHE PATENTSCHRIFT

(11) **EP 1 639 337 B1**
(45) Veröffentlichungstag und Bekanntmachung des Hinweises auf die Patenterteilung: **18.11.2009**
(21) Anmeldenummer: 04740201.1
(22) Anmeldetag: 23.06.2004
(51) Int. Cl.: G01M 3/00, G01M 3/38, F16L 55/26

(54) **KAMERAWAGEN**
DOLLY
CHARIOT POUR APPAREIL DE PRISE DE VUE

(30) Priorität: 25.06.2003 DE 20309864 U
(43) Veröffentlichungstag der Anmeldung: 29.03.2006
(73) Patentinhaber: RICO GESELLSCHAFT FüR MIKROELEKTRONIK mbH, D-87437 Kempten (DE)
(72) Erfinder:
(74) Vertreter: Vonnemann, Gerhard
(86) Internationale Anmeldenummer: PCT/EP2004/006780
(87) Internationale Veröffentlichungsnummer: WO 2004/113861

(56) Entgegenhaltungen:
- EP-A- 0 623 814
- EP-A- 1 022 553
- DE-A- 4 017 238
- DE-A- 4 206 609
- GB-A- 2 342 419

## Beschreibung

Die Erfindung betrifft einen Kamerawagen, mit einem Fahrwerk und einer Beleuchtungseinrichtung, zur Inspektion von Rohrleitungen, wobei eine Kamera in einem Gehäuse angeordnet ist und diese Mittel zur Änderung des Blickwinkels aufweist, wobei die Mittel als kardanische Lagerung des Gehäuses mit Motoren zum Verschwenken und/oder Rotieren des Gehäuses um mindestens eine, insbesondere um eine orthogonal zur Kamerawagenlängsachse gelegene, Achse ausgebildet sind.

Ein Kamerawagen ist aus der DE-PS 35 22 149 bekannt. Diese Schrift zeigt eine Vorrichtung zur Fernsehuntersuchung von Rohrleitungen. Bei dieser Vorrichtung sind zwei Kameras in einem gemeinsamen Gehäuse angeordnet und es sind optische Mittel, d.h. ein Siegel oder ein Prisma zum Rotieren des Gehäuses vorgesehen, um das optische Mittel um eine zur Achse des Kamerawagens parallele Achse zu drehen. Auf diese Weise kann eine Kamera in das Rohr hineinsehen und die andere Kamera den Umfang des Rohres prüfen.

Nachteilig an dieser Vorrichtung ist insbesondere, daß die optischen Achsen der Kameras versetzt sind. Dadurch verändert sich der optische Abstand der Kamera beim Schwenken des Spiegels.

Ein weiterer Kamerawagen ist beispielsweise aus der EP 1 022 553 A2 bekannt. Die genannte Druckschrift beschreibt einen Kamerawagen zum Inspizieren von Kanalrohren mit zwei elektronischen Kameras, von denen die eine an dem vorderen Ende des Kamerawagens und die andere Kamera an dem hinteren Ende des Kamerawagens angeordnet ist. Beide Kameras sind mit einem, einen hemisphärischen Raum erfassenden Weitwinkelobjektiv ausgerüstet. Die digitalen Bildsignale werden gespeichert und können zu einem späteren Zeitpunkt optisch ausgewertet werden.

Nachteilig bei diesem bekannten Kamerawagen ist, daß mit ihm keine Rohrabzweigungen inspiziert werden können, da die Fischaugen-Objektive fest mit dem Kamerawagen verbunden sind. Weiterhin ist eine detaillierte Untersuchung von Rohrmuffen mit diesem bekannten Kamerawagen nicht möglich.

Weiterhin von Nachteil ist die komplizierte Kabelführung. Üblicherweise münden die Energieversorgungs- und Datenkabel in den rückwärtigen Bereich des Kamerawagens. Dieser Bereich ist jedoch durch die zusätzliche Kameraoptik besetzt. Die Kabel müssen, um Kontakt mit dem Kamerawagen halten zu können, um die hintere Fischlinsenoptik herumgeführt werden.

Außerdem wird in der EP 0 623 814 A2 ein um zwei orthogonal zueinander angeordnete Achsen schwenkbares bzw. rotierbares Kameragehäuse mit nur einer Kamera beschrieben.

Schließlich ist aus der DE 42 06 609 A1 eine Vorrichtung zur Inspektion von Rohren bekannt, die eine Wärmebildkamera verwendet.

Aus der D3 ist ein Kamerakopf für eine Inspektionsvorrichtung bekannt, die an einem Schiebekabel oder einem Traktor befestigbar ist. Offbart ist ein Gehäuse mit zwei Kameras, deren optische Achsen im Betriebsmodus senkrecht aufeinander stehen und die gleichzeitig betrieben werden.

Der Erfindung liegt daher die Aufgabe zugrunde, einen für die unterschiedlichsten Aufgabenbereiche einsetzbaren Kamerawagen und ein Verfahren zur Inspektion von Rohrabschnitten mittels eines Kamerawagens und/oder Darstellung eines Inspektionsbefundes vorzuschlagen.

Diese Aufgabe wird erfindungsgemäß dadurch gelöst, dass eine zweite Kamera im gemeinsamen Gehäuse angeordnet ist, wobei die Kameras so im Gehäuse angeordnet sind, dass jede der beiden Kameras durch Verschwenken und/oder Rotieren des Gehäuses auf der selben optischen Achse mit identischer Blickrichtung positionierbar ist. Hierdurch wird mit Vorteil erreicht, dass zum einem zu einem gegebenen Zeitpunkt weniger Daten übermittelt werden müssen und dass zum anderen Positionskorrekturen zwischen den Datensätzen beider Kameras vermieden werden.

Beispielsweise können Kameras mit unterschiedlichen Objektiven oder Aufnahmetechniken zum Einsatz kommen. Durch Verschwenken oder Rotieren des Gehäuses können bestimmte Bereiche des Rohres genauer untersucht werden. Es ist aber auch denkbar, beispielsweise beim Hereinfahren eine Inspektion der Rohrleitung mit Kamera 1 und beim Herausfahren des Kamerawagens eine Inspektion des Rohres mit Kamera 2 vorzunehmen. Als Mittel zum Verschwenken und/oder Rotieren des Gehäuses kann beispielsweise ein Elektromotor vorgesehen sein. Wenn das Gehäuse beispielsweise in einer Gelenkgabel angeordnet ist, kann der Elektromotor entweder innerhalb einer oder beider Gelenkgabeln oder im Gehäuse selbst angeordnet sein. Die Daten- und Energieübertragung vom Gehäuse zum Kamerawagen geschieht beispielsweise über Schleifkontakte. Es ist von besonderem Vorteil, wenn das Gehäuse um eine orthogonal zur Kamerawagenlängsachse gelegene Achse verschwenkbar ist. Hierdurch können insbesondere senkrecht abzweigende Rohrverbindungen untersucht werden. Auch ist ein Verschwenken der gewünschten Kamera in die Geradeaus-Position ohne weiteres möglich.

Gemäß einer Weiterbildung der Erfindung ist mit Vorteil vorgesehen, daß zusätzlich Mittel zum Verschwenken und/oder Rotieren des Gehäuses um eine weitere, insbesondere parallel zur Kamerawagenlängsachse und orthogonal zur ersten Achse gelegene, Achse vorgesehen sind. Wenn hier von Parallelität der Achsen die Rede ist, so ist selbstverständlich auch der Sonderfall mit umfaßt, daß die Achsen deckungsgleich sind. Durch diese vorteilhafte Ausgestaltung ist es möglich, jede Position des Rohres genau zu untersuchen. Zur Realisierung ist beispielsweise an der Kamerawagenfront die bereits erwähnte Gelenkgabel angebracht, innerhalb derer das Gehäuse um eine Achse rotierbar angeordnet ist. Die gesamte Gelenkgabel kann mittels eines Elektromotors, der an oder im Kamerawagen angeordnet ist, um ihre Längsachse rotiert werden. Durch diese konstruktive Maßnahme ist es nun möglich, beispielsweise eine Rohrmuffe über ihren gesamten Umfang durch entsprechende Rotation der Gelenkgabel zu inspizieren. Danach können beispielsweise mit einer anderen, speziell dafür vorgesehenen Kamera eine oder mehrere Aufnahmen des gesamten Rohres getätigt werden.

Gemäß einer besonders vorteilhaften Ausgestaltung der Erfindung ist vorgesehen, daß die Kameraoptik der zweiten Kamera in die entgegengesetzte Richtung zur Optik der ersten Kamera ausgerichtet ist. Hierdurch ist es möglich, die jeweilig gewünschte Kamera durch Drehen des Gehäuses um 180 Grad in die Geradeaus-Position zu verfahren.

Um das Aneinandersetzen von verschiedenen Aufnahmen mittels Bildverarbeitungssoftware zu erleichtern, ist mit Vorteil vorgesehen, daß die zwei entgegengesetzt ausgerichteten Kameras auf derselben optischen Achse angeordnet sind.

Für viele Anwendungen, insbesondere für die elektronische Bildver- und bearbeitung ist es notwendig, hemisphärische Aufnahmen des Rohres zu erhalten. Dies wird insbesondere dadurch erreicht, daß eine Kamera mit einem entsprechenden Weitwinkelobjektiv, insbesondere einem Fischaugen-Objektiv, ausgerüstet ist. Die andere Kamera ist dann beispielsweise mit einer herkömmlichen Optik ausgestattet. Hierdurch ist es möglich, daß bei einer Inspektionsfahrt zum einen hemisphärische Aufnahmen gemacht werden können und zum anderen trotzdem bestimmte Bereich mittels einer herkömmlichen Inspektionsoptik inspiziert werden können. Beispielsweise können beim Einfahren des Kamerawagens alle Muffen umlaufend kontrolliert werden. Beim Erreichen einer speziellen Position wird dann die Kamera mit dem Weitwinkelobjektiv in eine Geradeaus-Position verfahren, so daß beim Herausfahren des Kamerawagens Weitwinkelaufnahmen des zu inspizierenden Rohres getätigt werden können. Es ist auch möglich, beispielsweise Weitwinkelobjektivaufnahmen von Rohrabzweigungen zu tätigen, wenn das Gehäuse mit zwei Schwenk- beziehungsweise Rotationsachsen versehen ist.

Mit Vorteil können automatisch oder benutzergesteuert detaillierte Aufnahmen durch variables Zoomen ermöglicht werden, wenn mindestens eine Kamera mit einem einen begrenzten Beobachtungsbereich sehr detailliert und in hoher Auflösung erfassenden Zoomobjektiv ausgestattet ist.

Zur Inspektion von Leckagen kann es gemäß einer Weiterbildung der Erfindung von Vorteil sein, daß mindestens eine Kamera eine Wärmebildkamera ist. Zusätzlich kann beispielsweise eine Kamera mit Weitwinkelobjektiv und/oder herkömmlichem Objektiv vorgesehen sein.

Die Verfahrensaufgabe wird bei einem Verfahren zur Inspektion von Rohrabschnitten und/oder Darstellung eines Inspektionsergebnisses mittels eines beschriebenen Kamerawagens dadurch gelöst, daß dass die Inspektion von Details und die Aufnahme des Umfangs des inspizierten Rohrabschnittes zeitlich getrennt voneinander erfolgen. Erfindungsgemäß kann zusätzlich zur Dokumentation von Schäden einer Rohrleitung auch lückenlos der aktuelle Zustand der Rohrleitung erfaßt und auf Datenträgern oder Papier dauerhaft gespeichert werden. Bei der Sanierung bzw. Überwachung von Rohrabschnitten ist nämlich nicht nur der einzelne Schaden von Bedeutung, sondern auch der Nachweis, daß keine weiteren Schäden vorliegen. Die Abwicklung des Umfangs gibt ein solches lückenloses Bild. Das Detailbild erlaubt darüber hinaus die genaue Schadensdiagnose. Durch die zeitliche Trennung kann insbesondere die notwendige Bandbreite zur Datenübertragung mit Vorteil verringert werden. Beispielsweise können die Details bei der Fahrt des Kamerawagens in das Rohr inspiziert werden. Zu diesem Zweck wird die Kamera mit der höheren Auflösung und Vergrößerung genutzt, die dann durch ihre kardanische Aufhängung das Rohr in allen Richtungen abtasten kann. Vor der Rückfahrt wird dann die optische Achse der anderen Kamera parallel zur Kamerawagenachse geschwenkt und während der Rückfahrt mittels einer geeigneten Optik, beispielsweise mittels eines Fischauges, der gesamte Rohrumfang gescannt und aufgezeichnet.

Eine Möglichkeit besteht dabei darin, von dem digitalisierten Bild des Fischauges nur jeweils eine oder mehrere ringförmige Bildzeilen zu nutzen und diese mittels eines Computers, vorzugsweise in Realzeit zu einer Abwicklung des Umfangs des inspizierten Rohrabschnitts zusammenzusetzen. Dabei kann die Anzahl der Bildzeilen in Abhängigkeit der von der Kamera gelieferten Frequenz der Bilder, sogenannter Bildfrequenz, und der Fahrgeschwindigkeit des Kamerawagens rechnerisch angepaßt werden. Zu diesem Zweck sieht das erfindungsgemäße Verfahren vor, daß die Aufnahme der Abwicklung während einer Fahrt durch den zu inspizierenden Rohrabschnitt, vorzugsweise in einer Richtung und mit vorzugsweise gleichbleibender Geschwindigkeit erfolgt. Eine weitere Möglichkeit besteht z.B. darin, die Bilder zu einer Abwicklung mittels bekannter Software zusammenzufügen. Diese Software, z.B. Photostich, fügt Bilder aufgrund der ähnlichen Bildelemente zusammen.

Die Auswertung des Inspektionsergebnisses wird besonders erleichtert, wenn eine automatische Zuordnung eines oder mehrerer der inspizierten Details zu einem Ort des abgewickelten Umfangs erfolgt. Dadurch kann dauerhaft der Schadensort mit seiner detaillierten Dokumentation in eindeutigen Zusammenhang mit seiner genauen Lage im inspizierten Rohrabschnitt gebracht werden. Dies geschieht durch entsprechende softwaregestützte Verknüpfung der Lagekoordinaten mit dem gewonnenen Bildmateriäl. Die Lage bzw. der jeweilige Ort des Kamerawagens kann beispielsweise durch einen mitfahrenden GPS-Empfänger (Global-Positioning-System) oder durch Messung der abgewickelten Kabellänge in Verbindung mit einem Referenzpunkt bestimmt werden.

Weitere vorteilhafte Ausgestaltungen des Verfahrens sind in den Ansprüchen 13 bis 17 beschrieben.

Die Zeichnung dient zum besseren Verständnis der Erfindung.

Dabei zeigt:
- Fig. 1:: eine schematische Darstellung des Kamerawagens,
- Fig. 2 bis Fig. 4:: eine mögliche Anordnung der Kameras im Gehäuse,
- Fig. 5 bis Fig. 7:: eine weitere mögliche Anordnung der Kameras im Gehäuse, und
- Fig. 8: eine Darstellung eines Monitorbildes in schematischer Form.

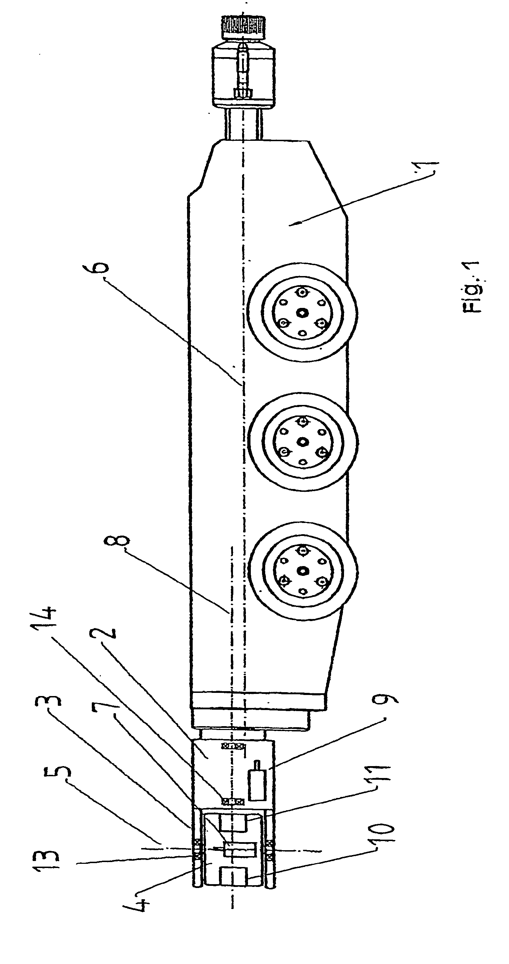

In Figur 1 ist ein Kamerawagen 1 mit Fahrwerk und Beleuchtungseinrichtung zur Inspektion von Rohrleitungen dargestellt. Der Kamerawagen ist mit der Umgebung außerhalb des Rohres mittels Daten- und Energieversorgungskabeln verbunden. Diese sind außerhalb des Rohres auf einer oder mehreren Kabelhaspeln aufgerollt und können entsprechend der Verfahrtiefe abgerollt werden. Es ist natürlich auch denkbar, den Kamerawagen mit einer Energieversorgungseinrichtung, insbesondere einer Batterie oder einem Akku zu versehen. Für die Übertragung von Steuer- und Datensignalen sind dann entsprechende Sende- und/oder Empfangseinrichtungen vorgesehen.

An der Vorderseite des Kamerawagens ist eine Gelenkgabel 2 vorgesehen. Zwischen den beiden Armen 3 der Gelenkgabel 2 ist ein rotierbares Gehäuse 4 vorgesehen. In diesem Ausführungsbeispiel ist das Gehäuse zwischen den Armen 3 um eine Achse 5 drehbar gelagert. Die Achse 5 ist orthogonal zur Fahrzeuglängsachse 6 angeordnet.

Als Mittel zum Verschwenken des Gehäuses 4 um die Achse 5 ist ein Elektromotor 7 innerhalb des Gehäuses 4 angeordnet.

Die Gelenkgabel 2 ist weiterhin um eine Achse 8, die der Längsachse der Gelenkgabel 2 entspricht, drehbar gelagert. Hierfür ist ein Elektromotor 9 innerhalb der Gelenkgabel 2 vorgesehen. Der Elektromotor 9 kann selbstverständlich auch innerhalb des Kamerawagens 1 angeordnet sein.

Das Gehäuse 4 ist also um zwei Achsen 5, 8 rotierbar angeordnet.

Innerhalb des Gehäuses 4 sind zwei Kameras 10, 11 angeordnet In diesem Ausführungsbeispiel handelt es sich dabei um zwei unterschiedliche Kameras. Kamera 10 hat einen Öffnungswinkel von max. 46 Grad und ist mit einem Objektiv mit 10-fach optischem Zoom und einer Brennweite von 4,2 bis 42 mm ausgerüstet. Bei dem Bildsensor handelt es sich beispielsweise um einen hochauflösenden CCD-Sensor.

Bei Kamera 11 handelt es sich um eine Kamera mit Fischaugen-Objektiv. Hierdurch können Aufnahmen des hemisphärischen Raumes getätigt werden. Durch Verschwenken des Gehäuses um eine oder beide Achsen kann die jeweils benötigte Kamera in die gewünschte Position, insbesondere in eine Geradeaus-Position, verfahren werden. Die Geradeaus-Position befindet sich parallel zur Fahrzeuglängsachse 6. Bei dem gezeigten Ausführungsbeispiel ist eine endlose Rotation des Gehäuses um jeweils 360 Grad um jede Achse 5, 8 möglich. Es ist aber auch eine Anordnung denkbar, bei welcher die Schwenkachse 5 nur begrenzte, durch Anschlag festgelegte Schwenkwinkel ermöglicht. Die Kameras 10 und 11 sind dann so im Gehäuse 4 angeordnet, daß jede der beiden Kameras in die Geradeaus-Position, parallel zur Fahrwagenlängsachse 6 positioniert werden kann. Zur Energie- und Datenübertragung werden hierbei nicht gezeigte Schleifringe eingesetzt.

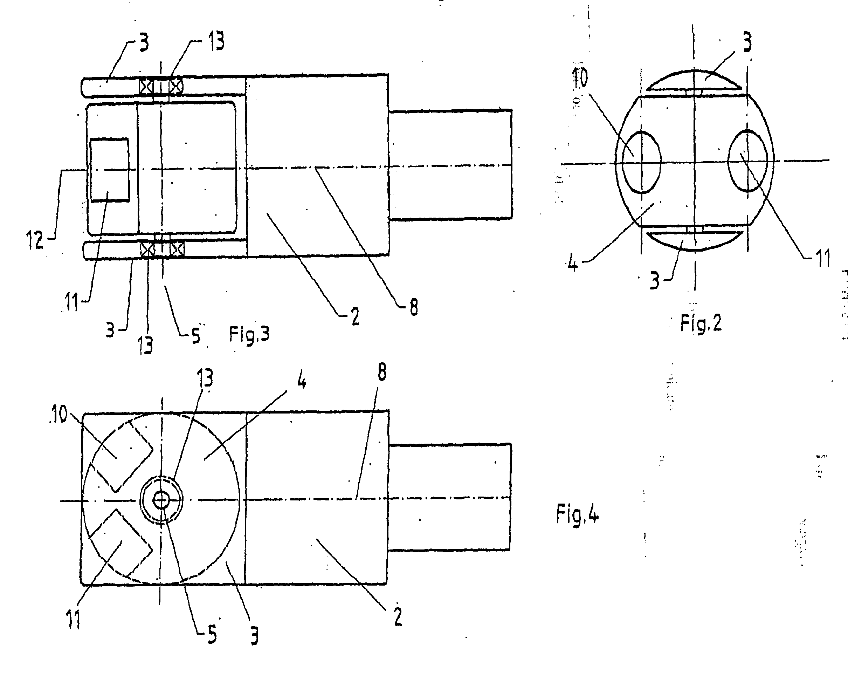

In den Figuren 2 bis 4 ist eine mögliche Anordnung der Kameras 10, 11 im Gehäuse 4 dargestellt. In den Figuren 2 bis 4 sind die beiden Kameras in einem 45-Grad-Winkel zueinander angeordnet. Durch Verschwenken des Gehäuses 4 um die Achse 5 kann die jeweils benötigte Kamera 10, 11 in eine Geradeaus-Position verfahren werden. In den Figuren 3 und 4 ist die Anordnung der Achsen 5, 8 zueinander ersichtlich. Achse 8 liegt parallel zur Fahrzeuglängsachse, wohingegen Achse 5 orthogonal zur Achse 8 angeordnet ist.

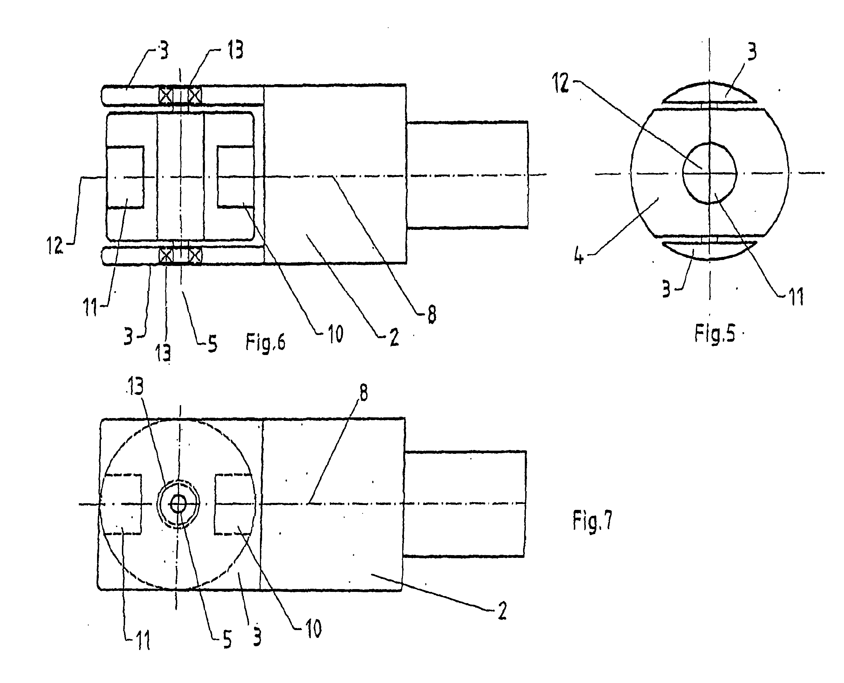

In den Figuren 5 bis 7 ist eine andere, vorteilhafte Anordnung von zwei Kameras 10, 11 im Gehäuse 4 gezeigt. Die Kamera 10 ist in die entgegengesetzte Richtung zur Kameraoptik der Kamera 11 ausgerichtet. Beide Kameras 10, 11 sind auf derselben optischen Achse 12 angeordnet, die in Figur 6 mit der Rotationsachse 8 zusammenfällt.

Es ist selbstverständlich denkbar, daß das Gehäuse 4 nicht zwischen zwei Armen 3 drehbar gelagert, sondern daß lediglich ein Arm vorgesehen ist, mit dem das Gehäuse 4 drehbar verbunden ist.

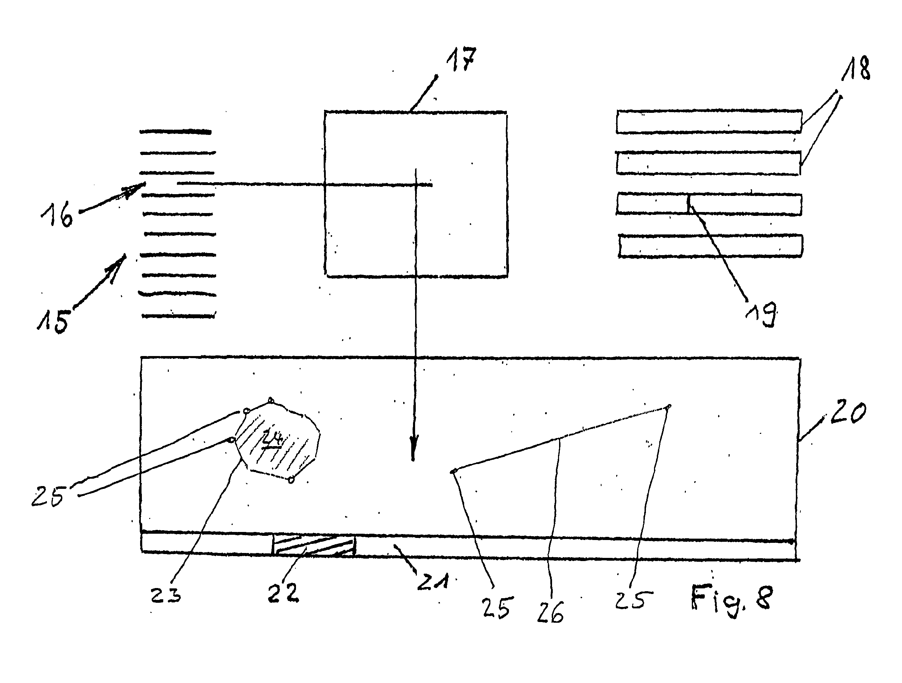

Figur 8 zeigt in der Form eine schematisierten Monitorbildes, daß aufgrund des erfindungsgemäßen Verfahrens eine sehr anschauliche bequeme Anzeige des Inspektionsergebnisses möglich ist. Den einzelnen Schadensbildem, die im Detail als Datei dokumentiert vorliegen, können Namen zugeordnet werden, die in Form einer Liste 15 auf dem Monitor zur Anzeige gebracht werden. Sobald ein Element 16 der Liste 15 markiert wird, erscheint in einem Detailbildbereich 17 das aufgenommene Schadensbild in detaillierter Darstellung. Zur Orientierung, an welchem Ort des Rohrleitungsverlaufs sich der diagnostizierte Schaden befindet, dient eine relativ kleine Darstellung der Umfangsabwicklung der Rohrleitung, dargestellt in einzelnen Abschnitten 18. Der Schadensort des angezeigten Details ist durch eine auffällige Marke 19 sofort zu erkennen. Der Vollständigkeit wegen ist das abgewickelte Bild des Rohrumfangs auch vergrößert als Abwicklungsdetail 20 dargestellt.

Die Bilddaten können auch mittels eines Scrollbalkens 21 durchsucht werden. Durch Verschieben der Schiebemarke 22 wird aufgrund der softwaregestützten Verknüpfung der Bilddaten in Realzeit auch die Marke 19 durch die Abschnitte 18 verschoben, und es werden auch die Elemente 16 der Liste 15 entsprechend hervorgehoben und im Detailbereich 17 angezeigt.

Die Darstellung der Abwicklungsdetails 20 erfolgt vorzugsweise in karthesischen Koordinaten, wobei die Abszisse den Ort in Achsrichtung der Rohrleitung darstellt und die Ordinate den Umfangswinkel des momentanen Rohrleitungsdurchmessers. Allerdings ist auch eine Darstellung in anderen Koordinatensystemen möglich.

Die Darstellung in karthesischen Koordinaten bietet den Vorteil, daß sie auch anschaulich eine quantitative Schadensdokumentation zuläßt. So läßt sich z. B. nach Öffnen einer Liste mit Softwarewerkzeugen, einer sogenannten Werkzeugleiste, mit Hilfe des Cursors ein Polygon 23 um einen Schadensbereich ziehen und dessen Fläche 24 automatisch ermitteln und zur Anzeige bringen.

Ähnlich läßt sich durch Setzen zweier Punkte 25 nach Starten eines entsprechenden Softwarewerkzeugs der Abstand des Punkte 25 oder die Länge der Strecke 26 zur Anzeige bringen.

Zur Darstellung der Details wird der abgewickelte Rohrumfang vorteilhaft bei 12 Uhr, also oben, aufgeschnitten. Die exakte Lage dieses Schnitts läßt sich besonders vorteilhaft durch einen Schwerkraftsensor automatisch vorgeben. Die Sohle eines Kanals liegt dann in der horizontalen Bildmitte.

Auf diese Weise ist aufgrund des Inspektionsverfahrens eine besonders anschauliche Darstellung und schnelle Analyse des umfangreichen Datenmaterials möglich.

### BEZUGSZEICHENLISTE

- 1: Kamerawagen
- 2: Gelenkgabel
- 3: Arme
- 4: Gehäuse
- 5: Schwenkachse
- 6: Fahrzeuglängsachse
- 7: Elektromotor
- 8: Rotationsachse
- 9: Elektromotor
- 10: Kamera
- 11: Kamera
- 12: Optische Achse
- 13: Gelenk für das Schwenken des Kamerakopfes
- 14: Drehgelenk für die Rotation des Kamerakopfes
- 15: Liste
- 16: Element
- 17: Detailbereich
- 18: Abschnitt
- 19: Marke
- 20: Abwicklungsdetail
- 21: Scrollbalken
- 22: Schiebemarke
- 23: Polygon
- 24: Fläche
- 25: Punkte
- 26: Strecke

## Patentansprüche

1. Kamerawagen, mit einem Fahrwerk und einer Beleuchtungseinrichtung, zur Inspektion von Rohrleitungen, wobei eine Kamera (10) in einem Gehäuse (4) angeordnet ist und diese Mittel zur Änderung des Blickwinkels aufweist, wobei die Mittel (7, 9, 2) als kardanische Lagerung des Gehäuses (4) mit Motoren zum Verschwenken und/oder Rotieren des Gehäuses (4) um mindestens eine, insbesondere um eine orthogonal zur Kamerawagenlängsachse (6) gelegene, Achse (5) ausgebildet sind, **dadurch gekennzeichnet, dass** eine zweite Kamera (11) im gemeinsamen Gehäuse (4) angeordnet ist, wobei die Kameras (10, 11) so im Gehäuse (4) angeordnet sind, dass jede der beiden Kameras (10, 11) durch Verschwenken und/oder Rotieren des Gehäuses (4) auf der selben optischen Achse mit identischer Blickrichtung positionierbar ist.

2. Kamerawagen nach Anspruch 1, **dadurch gekennzeichnet, daß** die Kameraoptik der zweiten Kamera (10) in die entgegengesetzte Richtung zur Kameraoptik der ersten Kamera (11) ausgerichtet ist.

3. Kamerawagen nach Anspruch 1 oder 2, **dadurch gekennzeichnet, daß** die beiden Kameras (10, 11) in ihren optischen Achsen (12) in einem vorgegebenen Winkel, beispielsweise 45°, zueinander angeordnet sind.

4. Kamerawagen nach einem der vorhergehenden Ansprüche, **dadurch gekennzeichnet, daß** mindestens eine Kamera (10, 11) eine Wärmebildkamera ist.

5. Verfahren zur Inspektion von Rohrabschnitten und/oder Darstellung eines Inspektionsergebnisses mittels eines Kamerawagens nach einem der Ansprüche 1 bis 4, wobei eine Kamera zur Dokumentation der Inspektion von Details dient und die andere zur Aufnahme des Umfangs des inspizierten Rohrabschnittes zur Darstellung der Umfangsabwicklung, **dadurch gekennzeichnet, dass** die Inspektion von Details und die Aufnahme des Umfangs des inspizierten Rohrabschnittes zeitlich getrennt voneinander erfolgen.

6. Verfahren zur Inspektion von Rohrabschnitten mittels eines Kamerawagens und/oder Darstellung eines Inspektionsergebnisses nach Anspruch 5, **dadurch gekennzeichnet, daß** die Aufnahme des Umfangs des inspizierten Rohrabschnitts zur Darstellung der Abwicklung während einer Fahrt durch den zu inspizierenden Rohrabschnitt, vorzugsweise in einer Richtung und mit vorzugsweise gleichbleibender Geschwindigkeit erfolgt.

7. Verfahren zur Inspektion von Rohrabschnitten mittels eines Kamerawagens und/oder Darstellung eines Inspektionsergebnisses nach Anspruch 5 oder, **dadurch gekennzeichnet, daß** eine automatische Zuordnung eines oder mehrerer der inspizierten Details zu einem Ort des abgewickelten Umfangs erfolgt.

8. Verfahren zur Inspektion von Rohrabschnitten mittels eines Kamerawagens und/oder Darstellung eines Inspektionsergebnisses nach einem der Ansprüche 5 bis 7, **dadurch gekennzeichnet, daß** das Inspektionsergebnis als Bild auf einem Monitor angezeigt wird, wobei ein Ausmessen einer Strecke, eines Umfangs und/oder einer Fläche im Monitorbild der Umfangsabwicklung mittels eines Cursors erfolgt.

9. Verfahren zur Inspektion von Rohrabschnitten mittels eines Kamerawagens und/oder Darstellung eines Inspektionsergebnisses nach einem der Ansprüche 5 bis 8, **dadurch gekennzeichnet, daß** eine Darstellung einer Detailliste auf dem Monitorbild, eine Markierung eines Elementes der Detailliste und/oder eines Details einer Umfangsabwicklung und/oder ein Gesamtbild der Umfangsabwicklung in unterschiedlichen Bildbereichen gleichzeitig auf dem Monitor erfolgt.

10. Verfahren zur Inspektion von Rohrabschnitten mittels eines Kamerawagens und/oder Darstellung eines Inspektionsergebnisses nach einem der Ansprüche 5 bis 9, **dadurch gekennzeichnet, daß** zwischen den Bildbereichen eine Zuordnung automatisch durch Markieren in einem Bildbereich erfolgt.

11. Verfahren zur Inspektion von Rohrabschnitten mittels eines Kamerawagens und/oder Darstellung eines Inspektionsergebnisses nach einem der Ansprüche 5 bis 10, **dadurch gekennzeichnet, daß** die Schnittlage zur Darstellung eines abgewickelten Rohrumfangs automatisch von einem Schwerkraftsensor vorgegeben wird.

12. Verfahren zur Inspektion von Rohrabschnitten mittels eines Kamerawagens und/oder Darstellung eines Inspektionsergebnisses nach einem der Ansprüche 5 bis 11, **dadurch gekennzeichnet, daß** Bildverzerrungen automatisch zu einem wahren Abbild des Rohrumfangs mittels Software ausgeglichen werden.

## Claims

1. A camera truck with a running gear and lighting equipment for inspecting pipelines, wherein a camera (10) is arranged in a housing (4) and features means for changing the angle of view, and wherein the means (7, 9, 2) are realized in the form of a cardanic support of the housing (4) with motors for pivoting and/or rotating the housing (4) about at least one axis, particularly about an axis (5) that extends orthogonally to the longitudinal axis (6) of the camera truck, **characterized in that** a second camera (11) is arranged in the common housing (4), wherein the cameras (10, 11) are arranged in the housing (4) in such a way that each of the two cameras (10, 11) can be positioned on the same optical axis with the same direction of view by pivoting and/or rotating the housing (4).

2. The camera truck according to Claim 1, **characterized in that** the optical system of the second camera (10) is oriented in the opposite direction referred to the optical system of the first camera (11).

3. The camera truck according to Claim 1 or 2, **characterized in that** the optical axes (12) of the two cameras (10, 11) are arranged at a predetermined angle relative to one another, for example 45°.

4. The camera truck according to one of the preceding claims, **characterized in that** at least one camera (10, 11) is a thermal imaging camera.

5. A method for inspecting pipe sections and/or displaying an inspection result by means of a camera truck according to one of Claims 1 to 4, wherein one camera serves for documenting the inspection of details and the other camera serves for recording the circumference of the inspected pipe section in order to display a circumferential developed view, **characterized in that** the inspection of details and the recording of the circumference of the inspected pipe section are carried out at different times.

6. The method for inspecting pipe sections and/or displaying an inspection result by means of a camera truck according to Claim 5, **characterized in that** the recording of the circumference of the inspected pipe section in order to displaying the developed view is carried out during one run through the pipe section to be inspected, preferably in one direction and with preferably constant speed.

7. The method for inspecting pipe sections and/or displaying an inspection result by means of a camera truck according to Claim 5 or [6], **characterized in that** one or more of the inspected details are automatically allocated to a location of the developed circumference.

8. The method for inspecting pipe sections and/or displaying an inspection result by means of a camera truck according to one of Claims 5 to 7, **characterized in that** the inspection result is displayed on a monitor in the form of an image, wherein a distance, a circumference and/or a surface in the monitor image of the circumferential developed view is measured by means of a cursor.

9. The method for inspecting pipe sections and/or displaying an inspection result by means of a camera truck according to one of Claims 5 to 8, **characterized in that** the display of a detail list on the monitor image, the marking of an element of the detail list and/or of a detail of a circumferential developed view and/or the display of a complete image of the circumferential developed view are carried out simultaneously on the monitor in different image areas.

10. The method for inspecting pipe sections and/or displaying an inspection result by means of a camera truck according to one of Claims 5 to 9, **characterized in that** an allocation between the image areas is carried out automatically by means of marking in one image area.

11. The method for inspecting pipe sections and/or displaying an inspection result by means of a camera truck according to one of Claims 5 to 10, **characterized in that** the sectional position for displaying a developed pipe circumference is automatically defined by a gravity sensor.

12. The method for inspecting pipe sections and/or displaying an inspection result by means of a camera truck according to one of Claims 5 to 11, **characterized in that** image distortions are automatically compensated by means of software such that a true image of the pipe circumference is obtained.

## Revendications

1. Chariot pour appareil de prise de vue, comprenant un train de roulement et un dispositif d'éclairage, pour l'inspection de canalisations, un appareil de prise de vue (10) étant disposé dans un boîtier (4) et présentant ces moyens pour la variation de l'angle de visée, les moyens (7, 9, 2) étant réalisés sous forme de suspension à Cardan du boîtier (4) avec des moteurs pour le basculement et/ou la rotation du boîtier (4) autour d'au moins un axe (5), en particulier autour d'un axe disposé perpendiculairement à l'axe longitudinal du chariot pour l'appareil de prise de vue (6), **caractérisé en ce qu'**un second appareil de prise de vue (11) est disposé dans le boîtier (4) commun, les appareils de prise de vue (10, 11) étant disposés dans le boîtier (4) de telle sorte que chacun des deux appareils de prise de vue (10, 11) peut être positionné par le basculement et/ou la rotation du boîtier (4) sur le même axe optique avec un sens de visée identique.

2. Chariot pour appareil de prise de vue selon la revendication 1, **caractérisé en ce que** l'optique du second appareil de prise de vue (10) est orientée dans la direction opposée à l'optique du premier appareil de prise de vue (11).

3. Chariot pour appareil de prise de vue selon la revendication 1 ou 2, **caractérisé en ce que** les deux appareils de prise de vue (10, 11) sont disposés dans leurs axes optiques (12) l'un par rapport à l'autre dans un angle prédéfini, par exemple 45°.

4. Chariot pour appareil de prise de vue selon l'une quelconque des revendications précédentes, **caractérisé en ce qu'**au moins un appareil de prise de vue (10, 11) est un appareil de prise de vue pour image thermique.

5. Procédé pour l'inspection de sections de tube et/ou la représentation d'un résultat d'inspection au moyen d'un chariot pour appareil de prise de vue selon l'une quelconque des revendications 1 à 4, un appareil de prise de vue servant à la documentation de l'inspection de détails et l'autre à la prise de vue de la périphérie de la section de tube inspectée pour la représentation du déroulement de la périphérie, **caractérisé en ce que** l'inspection de détail et la prise de vue de la périphérie de la section de tube inspectée s'effectuent séparément l'une de l'autre dans le temps.

6. Procédé pour l'inspection de sections de tube au moyen d'un chariot pour appareil de prise de vue et/ou la représentation d'un résultat d'inspection selon la revendication 5, **caractérisé en ce que** la prise de vue de la périphérie de la section de tube inspectée pour la représentation du déroulement intervient pendant un parcours dans la section de tube à inspecter, de préférence dans une direction et avec une vitesse de préférence uniforme.

7. Procédé pour l'inspection de sections de tube au moyen d'un chariot pour appareil de prise de vue et/ou la représentation d'un résultat d'inspection selon la revendication 5 ou 6, **caractérisé en ce qu'**une attribution automatique d'un ou de plusieurs des détails inspectés à un emplacement de la périphérie déroulée intervient.

8. Procédé pour l'inspection de sections de tube au moyen d'un chariot pour appareil de prise de vue et/ou la représentation d'un résultat d'inspection selon l'une quelconque des revendications 5 à 7, **caractérisé en ce que** le résultat de l'inspection est indiqué sous forme d'une image sur un moniteur, un mesurage d'un tronçon, d'une périphérie et/ou d'une surface s'effectuant sur l'image de moniteur du déroulement de la périphérie au moyen d'un curseur.

9. Procédé pour l'inspection de sections de tube au moyen d'un chariot pour appareil de prise de vue et/ou la représentation d'un résultat d'inspection selon l'une quelconque des revendications 5 à 8, **caractérisé en ce qu'**une représentation d'une liste de détails sur l'image de moniteur, un marquage d'un élément de la liste de détails et/ou d'un détail d'un déroulement de la périphérie et/ou une image globale du déroulement de la périphérie dans différentes zones d'image intervient simultanément sur le moniteur.

10. Procédé pour l'inspection de sections de tube au moyen d'un chariot pour appareil de prise de vue et/ou la représentation d'un résultat d'inspection selon l'une quelconque des revendications 5 à 9, **caractérisé en ce que**, entre les zones d'images, une attribution s'effectue automatiquement par marquage dans une zone d'image.

11. Procédé pour l'inspection de sections de tube au moyen d'un chariot pour appareil de prise de vue et/ou la représentation d'un résultat d'inspection selon l'une quelconque des revendications 5 à 10, **caractérisé en ce que** la position de coupe pour la représentation d'une périphérie de tube déroulée est prédéfinie automatiquement par un capteur de force de gravité.

12. Procédé pour l'inspection de sections de tube au moyen d'un chariot pour appareil de prise de vue et/ou la représentation d'un résultat d'inspection selon l'une quelconque des revendications 5 à 11, **caractérisé en ce que** des distorsions d'image sont compensées automatiquement par logiciel pour obtenir une véritable reproduction de la périphérie du tube.
